# EUROPÄISCHE PATENTSCHRIFT

(11) **EP 0 507 141 B1**
(45) Veröffentlichungstag und Bekanntmachung des Hinweises auf die Patenterteilung: **23.04.1997**
(21) Anmeldenummer: 92104535.7
(22) Anmeldetag: 17.03.1992
(51) Int. Cl.: C08L 69/00, C08L 77/00

(54) **Verträgliche Mischungen aus aromatischen Poly-(ester)-carbonaten und Polyamiden**
Compatible blends of aromatic poly-(ester)-carbonates and polyamides
Mélanges compatibles de poly-(ester)-carbonates aromatiques et de polyamides

(30) Priorität: 30.03.1991 DE 4110484
(43) Veröffentlichungstag der Anmeldung: 07.10.1992
(73) Patentinhaber: BAYER AG, 51368 Leverkusen (DE)
(72) Erfinder: Heger, Georg, Dr., W-4150 Krefeld (DE); Piejko, Erwin, Dr., W-5060 Bergisch Gladbach 2 (DE); Buekers, Josef, W-4150 Krefeld (DE); Morbitzer, Leo, Dr., W-5000 Köln 80 (DE); Karbach, Alexander, Dr., W-4150 Krefeld (DE)

(56) Entgegenhaltungen:
- EP-A- 0 330 015
- WO-A-88/02387
- WO-A-90/02775
- WPI, AN=78-90332A (50), Derwent Publications Ltd, London, GB; & JP-B-60 031 224
- PATENT ABSTRACTS OF JAPAN, Band 13, Nr. 151 (C-584)(3499), 12. April 1989; & JP-A-63 308 071

## Beschreibung

Die Erfindung betrifft Mischungen aus teilkristallinen oder amorphen Polyamiden, Poly-(ester)carbonaten bzw. Polycarbonaten Saure- oder, tert. estergruppenhaltigen, relativ harten (Meth)Acrylatpolymerisaten und gegebenenfalls Elastomeren, sowie üblichen Additiven und die Verwendung dieser Mischungen zur Herstellung von Formkörpern.

Binäre Formmassen aus Polycarbonaten und Polyamiden sind ohne Zusätze nicht thermoplastisch verarbeitbar. Auf dem Extruder schäumt die Schmelze auf, da das Polycarbonat vom Polyamid abgebaut wird. J 85/31224 beschreibt Mischungen aus Polyamid, Polycarbonat, Polyacrylat ohne Reaktivgruppen und Polyphenylen-(ester)ethern, die auf dem Extruder verarbeitbar sind. Dagegen werden in EP 315 167 Mischungen aus Polyamid, Polycarbonat und einem Additiv auf der Basis modifizierter Polyoxyalkylene beansprucht. Die erhaltenen Formmassen aus beiden Rezepturen weisen jedoch Oberflächenstörungen auf, die auf die Unverträglichkeit der Polykondensate zurückzuführen sind.

Aus EP 227 053 geht hervor, daß sich aus Polyamid, aromatischem Polycarbonat mit Hilfe von Polykondensaten auf der Basis von Bisphenolen mit Glycidyl-Endgruppen verträgliche Mischungen herstellen lassen. In der J 63/314270 werden Polyamid/Polycarbonat-Mischungen beschrieben, die Copolymerisate auf der Basis Polyolefin/Glycidylmethacrylat enthalten. Die Unverträglichkeit beider Systeme zeigt sich in der geringen Zähigkeit der Mischungen, die eine breite technische Anwendung ausschließt.

J 63/33469 beansprucht Mischungen aus Polyamid, Polycarbonat, einem Phenoxyharz und m-Phenylendiamin. Nachteilig ist die Verwendung des niedermolekularen Additivs, da bei der Verarbeitung gesundheitsschädliche Dämpfe und Geruchsbelästigungen entstehen und die Endprodukte nicht farbstabil sind.

Die WO 88/02387 lehrt, daß durch die Verwendung von Verträglichkeitsvermittlern(z.B. Polyesteramiden, ABS, MBS, EPM-Kautschuk oder Polymethylmethacrylat) technisch hochwertige Polyamid/Polycarbonat-Blends erhalten werden. Die Zugabe der weichen Polymere verringert jedoch die praktische Wärmeformbeständigkeit oder führt nur zu unzureichenden Zähigkeitsverbesserungen.

Die Aufgabe der vorliegenden Erfindung war es somit, thermoplastisch gut verarbeitbare Formmassen aus Polyamid und Polycarbonat herzustellen, die keine Delaminierungen und somit störungsfreie Oberflächen aufweisen. Darüber hinaus sollten die Blends gute Zähigkeiten bei einer erhöhten Wärmeformbeständigkeit besitzen.

Dies wird durch die erfindungsgemäßen Formmassen gelöst, die aus Polyamid, Polycarbonat bzw. Polyestercarbonat, tert. estergruppenhaltigen (Meth-)Acrylatpolymerisaten und gegebenenfalls Elastomeren bestehen.

Gegenstand der Erfindung sind somit Mischungen, die
A) 5 bis 70 Gew.-%, vorzugsweise 10 bis 60 Gew.-%, insbesondere 15 bis 50 Gew.-% thermoplastische Polyamide,
B) 94 bis 10 Gew.-%, (mindestens 10 Gew.-%), vorzugsweise 87 bis 35 Gew.-%, insbesondere 80 bis 40 Gew.-% thermoplastische, aromatische Polyestercarbonate oder Polycarbonate,
C) 1 bis 20 Gew.-%, vorzugsweise 3 bis 15 Gew.-%, insbesondere 5 bis 10 Gew.-% thermoplastische Copolymerisate aufgebaut aus
   C1) 9,5 bis 99,5 Gew.-%, vorzugsweise 11 bis 89 Gew.-%, insbesondere 20 bis 73,5 Gew.-% (Meth-)Acrylsäure-C₁-C₄-Alkylester
   C2) 0 bis 90 Gew.-%, vorzugsweise 10 bis 80 Gew.-%, insbesondere 25 bis 70 Gew.-% (Meth-)Acrylsäure-C₁₀-C₄₀-Alkylester oder (Meth-)Acrylsäureester der allgemeinen Formel 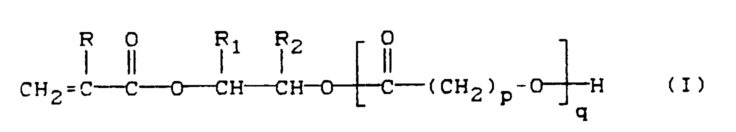 worin
      - R, R₁, R₂: Wasserstoff oder Methyl,
      - p: 2 bis 6 und
      - q: 2 bis 200 bedeuten,
   C3) 0,5 bis 15 Gew.-%, vorzugsweise 1 bis 12 Gew.-%, insbesondere 1,5 bis 10 Gew.-% Vinylmonomere mit Säure- oder tert. Estergruppen, wobei die Polymerisate C) gegebenenfalls mindestens 5 Gew.-% Glutarimid-Einheiten und/oder Anhydrid-Einheiten aufweisen können,
   und
D) gegebenenfalls bis 30 Gew.-% Elastomere als Schlagzähmodifikatoren enthalten,
   so daß sich A), B), C) und gegebenenfalls D) zu 100 Gew.-% ergänzen, wobei zusätzlich
E) übliche Aditive wie Gleit- und Entformungsmittel, Nukleierungsmittel, Weichmacher, Stabilisatoren, UV- oder Lichtschutzmittel, Thermostabilisatoren, Füll- und Verstärkungsstoffe, Flammfestmittel, Antidrippingmittel und farbgebende Stoffe in wirksamen Mengen, wie sie dem Stand der Technik bekannt sind, für ihre konventionell verwendeten Zwecke mitverwendet werden.

Der Anteil der Komponente D) kann 0-30 Gew.-%, bevorzugt 5-20 Gew.-% betragen.

### Polyamide (A)

Als Polyamid-Komponente A) der erfindungsgemäßen Formmassen eignen sich alle thermoplastischen, teilkristallinen Polyamide, insbesondere Polyamid-6, Polyamid-6,6, Polyamid-4,6 und teilkristalline Copolyamide auf Basis dieser Komponenten. Weiterhin kommen teilkristalline Polyamide in Betracht, deren Säurekomponente insbesondere ganz oder teilweise (neben Adipinsäure bzw. ε-Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Bevorzugte teilkristalline Polyamide A) sind Polyamid-6, Polyamid-4,6, Polyamid-6,6 oder Copolyamide mit nur geringen Anteilen (bis etwa 10 Gew.-%) der Co-Komponenten. Besonders bevorzugt sind Polyamid-6 und -66.

Es können als Polyamidkomponente A) auch amorphe Polyamide eingesetzt werden. Sie werden erhalten durch Polykondensation von Diaminen, beispielsweise Ethylendiamin, Tetramethylendiamin, Hexamethylendiamin, Decamethylendiamin, 2,2,4- und/oder 2,4,4-Trimethylhexamethylendiamin, m- und/oder p-Xylylendiamin, Bis-(4-amino-cyclohexyl)-methan oder Gemischen aus 4,4'- oder 2,2'-Diamino-dicyclohexyl-methanen, 2,2-Bis-(4-amino-cyclohexyl)-propan, 3,3'-Dimethyl-4,4'-diamino-dicyclo-hexylmethan, 3-Amino-ethyl-3,5,5-tri-methyl-cyclohexylamin, 2,5- und/oder 2,6-Bis-(aminomethyl)-norbornan und/oder 1,4-Diaminomethylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren wie ω-Aminocapronsäure, ω-Aminoundecansäure oder ω-Aminolaurinsäure oder ihren Lactamen, hergestellt werden.

Besonders geeignete amorphe Polyamide sind Polyamide, hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethyl-hexamethylendiamin, 2,5- und/oder 2,6-Bis-(aminomethyl)-norbornan; oder aus Isophthalsäure, 4,4'-Diamino-dicyclohexylmethan und ε-Caprolactam; oder aus Isophthalsäure, 3,3'-Dimethyl-4,4'-diamino-dicyclo-hexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diamino-dicyclohexylmethans können auch Gemische der stellungsisomeren Diamino-dicyclohexylmethane eingesetzt werden, die sich zusammensetzen aus:
70 bis 99 Mol-% des 4,4'-Diaminoisomeren
1 bis 30 Mol-% des 2,4'-Diaminoisomeren
0 bis 2 Mol-% des 2,2'-Diaminoisomeren
und gegebenenfalls entsprechend höherkondensierten Diaminen, die durch Hydrierung von Diaminophenylmethan technischer Qualität erhalten werden.

Die Polyamide A können auch aus Mischungen von einem Copolyamid, bestehend aus wiederkehrenden Einheiten, die sich von der Adipinsäure und Hexamethylendiamin ableiten und Einheiten, die sich von ε-Caprolactam ableiten, und Polyhexamethylenadipinsäureamid, wie in der DE-OS 37 35 404 beschrieben, oder aus teilkristallinen und amorphen Polyamiden bestehen, wobei vorzugsweise der amorphe Polyamidanteil unter dem teilkristallinen Polyamidanteil liegt.

Bevorzugt sind teilkristalline Polyamide auf Basis Polyamid-6, Polyamid-66 und teilkristalline Polyamide auf Basis dieser Hauptkomponenten unter Zusatz von Co-Komponenten der erwähnten Art.

Bevorzugt sind Polyamide, bei denen der Gehalt an Amino-Endgruppen erniedrigt ist und z.B. unter 30 mEq/kg beträgt. Dies kann durch entsprechende Dicarbonsäureverhältnisse eingestellt werden oder durch eine Endgruppen-Modifizierung durch acylierende Umsetzungen von Endgruppen erreicht werden, wie sie in der Literatur breit beschrieben sind.

### Polycarbonate/Polyestercarbonate (B)

Die als Legierungsbestandteil B) einsetzbaren thermoplastischen, aromatischen Poly-(ester-)carbonate sind aus aromatischen Diphenolen (b₁), Phosgen und/oder gegebenenfalls Dicarbonsäuren (b₂) aufgebaut.

Beispiele für Diphenole (b₁) der Formel (II) sind:

HO - Ar - OH (II)

Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, Pentamethyl-(hydroxyphenyl)-indanol, α,α'-Bis-(hydroxyphenyl)-diisopropylbenzole sowie deren kernalkylierte und kernhalogenierte Verbindungen.

Diese und weitere geeignete aromatische Dihydroxyverbindungen sind z.B. in den US-Patentschriften 3 028 365, 2 999 835, 3 148 172, 3 271 268, 2 991 273, 3 271 367, 3 780 078, 3 014 891, 2 999 846 den Deutschen Offenlegungsschriften 15 70 703, 20 36 052, 20 63 050, 22 11 957, 24 02 175, 24 02 176, 24 02 177, der Französischen Patentschrift 1 561 518, in der Monographie "H. Schnell, Chemistry and Physics of Polycarbonates, Polymer Reviews 9, Interscience Publishers, New York 1964" und in V. Serini, D. Freitag und H. Vernaleken, "Polycarbonate aus o,o,o',o'-tetramethyl-bis-phenolensubstituierten Bisphenolen" Angewandte Makromolekulare Chemie 55 (1976) 175-189 beschrieben.

Bevorzugte Phenole der Formel (II) sind:
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hdroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol.

Besonders bevorzugte Diphenole der Formel (II) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Insbesondere sind 2,2-Bis-(4-hydroxyphenyl)-propan und 1,1-Bis-(4-hydroxyphenyl)-3,3,5-trimethylcyclohexan bevorzugt.

Es können ein oder mehrere Diphenole (b₁) eingesetzt werden, Sie können in an sich bekannter Weise durch Kondensation von Phenolen und Ketonen hergestellt werden.

Die eingesetzten Polycarbonate können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (II) in wäßrig alkalischer Phase gelöst. Zur Herstellung von Co-Polycarbonaten werden Gemische von Diphenolen der Formel (II) eingesetzt. Zur Regulierung des Molekulargewichtes können Kettenabbrecher zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Als Verzweiger dienen, falls benutzt, in bekannter Weise geringe Mengen, vorzugsweise Mengen zwischen 0,05 und 2,0 Mol-% (bezogen auf eingesetzte Diphenole), an drei oder mehr als drei funktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan, Hexa-(4-(4-hydroxyphenyl-isopropyl)phenyl)-orthoterephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben don einzusetzenden Diphenolen der Formel (II) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktur-Einheiten von (II); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden. Die Isolierung der Polycarbonate erfolgt in bekannter Weise.

Die hochmolekularen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die verwendeten Polycarbonate haben bevorzugt Molekulargewichte Mw (Gewichtsmittel, ermittelt durch chromatographie nach vorheriger Eichung) von mindestens 12 000, besonders bevorzugt von 12 000 bis 220 000 und insbesondere von 20 000 bis 100 000. Sie können linear oder verzweigt sein, sie sind Homopolycarbonate oder Copolycarbonate auf Basis der Diphenole der Formel (II).

Geeignete, gegebenenfalls einzusetzende, aromatische Dicarbonsäuren (b₂) sind beispielsweise Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophthalsäure, Tetrahydroisophthalsäure, 3,6-Endomethylen-tetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4'4'-Benzophenondicarbonsäure, 3,4'-Benzophenondicarbonsäure, 4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Bevorzugt werden die Polyestercarbonate, in denen die Dicarbonsäuren (b₂) in einer Menge von 5 bis 98 Mol-%, bevorzugt von 20 bis 50 Mol-% und 60 bis 95 Mol-% und insbesondere von 25 bis 45 Mol-% und 80 bis 95 Mol-% bezogen auf die Summe der Dicarbonsäuren (b₂) und der Kohlensäure enthalten sind.

Aromatische Polyestercarbonate können nach Verfahren hergestellt werden, wie sie für die Polyestercarbonat-Herstellung aus der Literatur bekannt sind, so z.B. nach Verfahren in homogener Lösung, nach dem Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Schmelzumesterungsverfahren (Acetatverfahren und Phenylesterverfahren) werden beispielsweise in den US-PS 3 494 885, 4 386 186, 4 661 580, 4 680 371 und 4 680 372, den EP-A 26 120, 26 121, 26 684, 28 030, 39 845, 91 602, 97 970, 79 075, 146 887, 156 103, 234 913, 234 919 und 240 301 sowie den DE-OS 1 495 626, 2 232 877 beschrieben. Das Zweiphasengrenzflächenverfahren wird beispielsweise beschrieben in den EP-A 68 014, 88 322, 134 898, 151 750, 182 189, 219 708, 272 426, in DE-OS 2 940 024, 3 007 934, 3 440 020 und in Polymer Reviews, Volume 10, "Condensation Polymer by Interfacial and Solution Methods", Paul W. Morgan, Interscience Publishers, New York 1965, Kap. II, S. 325, Polyester.

Beim Acetatverfahren werden im allgmeinen Bisphenoldiacetat bzw. Bisphenol und Acetatanhydrid sowie aromatische Dicarbonsäure unter Abspaltung von Essigsäure zum Polyester kondensiert. Beim Phenylesterverfahren werden im allgemeinen Bisphenol, aromatische Dicarbonsäure oder Diphenylester der aromatischen Dicarbonsäure und gegebenenfalls Diphenylcarbonat unter Phenolabspaltung und gegebenenfalls CO₂-Abspaltung zum Polyester bzw. Polyestercarbonat umgesetzt.

Beim Zweiphasengrenzflächenverfahren dienen als Ausgangsstoffe zur Herstellung von Polyestern und estercarbonaten, im allgemeinen Alkalibisphenolat, aromatisches Dicarbonsäuredichlorid und gegebenenfalls Phosgen. Bei dieser Kondensationsreaktion werden der Polyester bzw. das Polyestercarbonat unter Alkalichloridbildung hergestellt. Im allgemeinen ist das gebildete Salz in der wäßrigen Phase gelöst, während der gebildete Polyester bzw. das gebildete Polycarbonat in der organischen Phase gelöst vorliegt.

Die Isolierung der Polyestercarbonate geschieht in bekannter Weise, indem man die bei Phasengrenzflächenverfahren erhaltene organische Phase abtrennt, neutral und elektrolytfrei wäscht und dann beispielsweise aus organischer Phase unter Zusatz eines Nichtlösemittels fällt und trocknet.

### Unvernetzte, thermoplastische Polymerisate (C)

Bei der Komponente C) der erfindungsgemäßen Formmassen handelt es sich um unvernetzte Polymerisate mit mittleren Molekulargewichten M_{w} (ermittelt beispielsweise durch Streulichtmesung) von 2.000 bis 500.000 g/Mol, vorzugsweise von 5.000 bis 200.000 g/Mol, die dadurch gekennzeichnet sind, daß die Polymerisate C) aus
C1) 9,5 bis 99,5 Gew.-%, vorzugsweise 11 bis 89 Gew.-%, insbesondere 20 bis 73,5 Gew.-% (Meth-)Acrylsäure-C₁-C₄-alkylester
C₂) 0 bis 90 Gew.-%, vorzugsweise 10 bis 80 Gew.-%, insbesondere 25 bis 70 Gew.-% (Meth-)Acrylsäure-C₁₀-C₄₀-alkylester oder Methacrylsäureester der allgemeinen Formel (I) 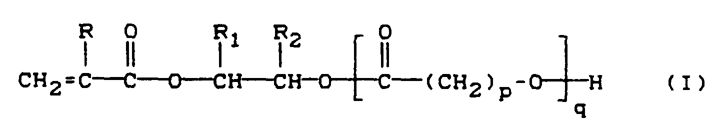 worin
   - R, R₁, R₂: Wasserstoff oder Methyl,
   - p: 2 bis 6 und
   - q: 2 bis 200 bedeuten.
   Bevorzugte Alkylester der (Meth-)Acrylsäure gemäß C2) sind solche von C₁₂-C₃₀-Alkoholen, insbesondere von C₁₄-C₂₈-Alkoholen und ganz besonders von C₁₆-C_{2 6}-Alkoholen. Von den Estern der Formel (I) werden die mit R = Wasserstoff oder Methyl, R₁ = R₂ = Wasserstoff, p = 5 und q = 8 bis 30 bevorzugt. Diese Ester sind beispielsweise aus der US-PS 3 655 631 bekannt.
C3) 0,5 bis 15 Gew.-%, vorzugsweise 1 bis 12 Gew.-%, insbesondere 1,5 bis 10 Gew.-% Vinylmonomere mit Säure- oder tert. Estergruppen,
bestehen, und wobei die Polymerisate C) gegebenenfalls mindestens 5 Gew.-% Glutarimid-Einheiten aufweisen können.

Bevorzugt geeignete Vinylmonomere C3) mit Säure- oder tert. Estergruppen sind (Meth)Acrylsäure bzw. deren tertiäre Ester der allgemeinen Formel 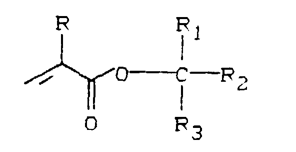 mit R = H, CH₃ und
R₁, R₂, R₃ = Alkyl, so daß die Summe der C-Atome in R₁, R₂ und R₃ 3 bis 9 beträgt.

Besonders bevorzugte Monomere C3) sind tert.-Butylacrylat, tert.-Butylmethacrylat, tert.-Pentylmethacrylat und tert.-Hexylacrylat, sowie gegebenenfalls tert. Octyl(meth)acrylat, insbesondere tert.-Butylacrylat und tert.-Butylmethacrylat.

Bevorzugt sind weiterhin Polymerisate C) mit C1) Methacrylsäure-C₁-C₄-alkylestern. Imidisierte Polyacrylate mit mindestens 5 Gew.-% Glutarimid-Einheiten werden mittels einer Reaktion zwischen Polyacrylaten aus Estern der Acryl- oder Methacrylsäure und Ammoniak oder primären Aminen z.B. entsprechend US 4 246 374 hergestellt. Sie können neben den Imid-Einheiten auch noch entsprechende Anhydrid-Einheiten aufweisen.

Die erfindungsgemäß einzusetzenden thermoplastischen Polymerisate C) sind entweder als solche bereits bekannt oder nach bekannten Verfahren erhältlich (siehe beispielsweise GB-OS 2 076 171 oder DE-AS 2 724 360).

Geeignete Monomere C1) sind Methacrylsäuremethylester, Methacrylsäureethylester, Methacrylsäurepropylester, Methacrylsäure-iso-propylester, Methacrylsäurebutylester und Methacrylsäure-iso-butylester. Bevorzugtes Monomer C1) ist Methacrylsäuremethylester.

Die C₁₀-C₄₀-Alkylreste in den Monomeren C2) können linear oder verzweigt, ungesättigt oder gesättigt sein, bevorzugt sind lineare, gesättigte C₁₀-C₄₀-Alkylreste. Geeignete Alkylreste sind beispielsweise Octadecyl, 1-Eicosanyl und 1-Docosanyl. Bevorzugte Monomere C2) sind beispielsweise Stearylacrylat, Behenylacrylat bzw. 1-Docosanylacrylat und Eicosanylacrylat und die entsprechenden Ester der Methacrylsäure wie Stearylmethacrylat, 1-Docosanylmethacrylat und Eicosanylmethacrylat.

Die unvernetzten Polymerisate C) aus den Monomeren C1) und gegebenenfalls C2) sowie aus den Monomeren C3) haben bevorzugt Sprödigkeitstemperaturen von mehr als + 2°C, vorzugsweise von mehr als + 10°C.

Die Sprödigkeitstemperaturen sind im Falle rein amorpher Polymere gleichzusetzen mit deren Glastemperaturen (zu den Glastemperaturen von Polymeren siehe "Polymer Handbook", 2. Aufl., Wiley & Sons, New York 1975, S. III/139f). Polymere, enthaltend die Monomeren C2), können jedoch ab bestimmten C-Kettenlängen der Alkoholreste der Monomeren C2) und von bestimmten Anteilen der Monomeren C2) an teilkristallin vorliegen; die Sprödigkeit der Polymerisate wird in diesen Fällen auch durch die Menge der kristallinen Anteile und deren Schmelztemperatur beeinflußt (zu den Sprödigkeitstemperaturen von Homo-Poly(meth)acrylsäureestern s. H.G. Elias, "Makromoleküle", Hüthig & Wepf, Basel-Heidelberg 1971, S. 313; zu den Glas- und Schmelztemperaturen von Copolymeren mit zur Kristallisation befähigten Monomeren (mit den Beispielen Octadecylacrylat/Methylmethacrylat) s. E. F. Jordan jr., B. Artymyshyn, A. Speca, A.N. Wrigley, J. Polym, Sci. A-1, Vol.1, 3319-3365 (1971) und E.F. Jordan jr., ibid, 3367-3378).

Die Zusammensetzung der Polymerisate C), enthaltend Monomere C2), die unterschiedliche C-Kettenlängen der Alkoholreste besitzen können, soll bevorzugt so gewählt werden, daß die Glastemperatur der Polymerisate mehr als +2°C, vorzugsweise mehr als +10°C beträgt oder daß die C-Kettenlängen der Alkoholreste der Monomeren C2) so groß sind und die Anteile dieser Monomeren im Polymerisat so hoch sind, daß die Polymerisate kristalline Phasen enthalten und damit kein Elastomer darstellen.

Die Glastemperaturen der Polymerisate bzw. das Vorliegen kristalliner Phasen lassen sich beispielsweise durch differentielle Thermoanalyse bestimmen.

Die Herstellung der Komponente C) kann nach beliebigen Polymerisationsverfahren in Masse, Lösung, Wasser, Suspension, Dispersion und Emulsion radikalisch, thermisch oder ionisch erfolgen. Bevorzugt wird die Komponente C) in Masse oder in Emulsion hergestellt.

Im Falle der bevorzugten Emulsionspolymerisation wird vorzugsweise so vorgegangen, daß aus einer Lösung der Monomeren C1) und C3) sowie gegebenenfalls C2) die bis zu 100 Gew.-%, vorzugsweise bis zu 50 Gew.-% und insbesondere bis zu 25 Gew.-%, bezogen auf die Gewichtssumme der zu polymerisierenden Monomeren der Komponente C), eines inerten organischen Lösungsmittels enthält, und einer wäßrigen Lösung geeigneter Emulgatoren mittels Rührwerken, Emulgiermaschinen, beispielsweise Homogenisatoren, oder mittels Verdüsen eine Voremulsion hergestellt wird.

Entsprechende Emulgieraggregate sind dem Fachmann bekannt. Als Emulgatoren sind anionische, kationische oder nichtionische geeignet wie beispielsweise höhere aliphatische Fettsäuren, organische Sulfonsäuren oder Schwefelsäurehalbester, Alkylammoniumsalze, polyethoxylierte Phenoldervate oder aliphatische polyethoxylierte Polyetherblockpolymere. Das Verhältnis der wäßrigen zur organischen Phase der Voremulsion kann dabei in weiten Grenzen variieren; bevorzugt liegt das Verhältnis der wäßrigen zur organischen Phase zwischen 9/1 und 1/1. Die Voremulsion wird dann mit Hilfe üblicher Radikalinitiatoren unter Anwendung üblicher Bedingungen kontinuierlich, halbkontinuierlich oder batchweise polymerisiert.

Die Einstellung des Molekulargewichts der Komponente C) kann durch verschiedene Maßnahmen erreicht werden, wie Temperatur, Monomerkonzentration, Startermenge oder durch Einsatz sogenannter Regler, wie Organoschwefel-Verbindungen, beispielsweise Mercaptane und/oder Disulfide, wobei langkettige Mercaptane wie n- oder tert.-Dodecylmercaptane vorteilhaft sind.

Die Regler werden normalerweise im Monomergemisch gelöst und die Mischung danach polymerisiert. Eine derartige Molekulargewichtseinstellung von Vinylpolymeren ist dem Fachmann geläufig.

### Elastomere/Schlagzähmodifikatoren (D)

Typische Vertreter der Komponente D) sind z.B. Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockcopolymere wie Styrol/Butadien-Blockcopolymere.

Weiterhin geeignete Komponenten D) können Olefinkautschuke mit sauren Gruppen sein. Vorteilhaft kann besonders jedoch der Einsatz von Carboxylgruppen enthaltenden Terpolymerisaten aus Ethylen, (Meth)acrylsäure sowie Butylacrylat sein, oder von gepfropften Copolymeren auf Basis von Ethylen/Propylen-Copolymerisaten oder auf Basis von Ethylen/Propylen/Butadien-Copolymerisaten die mit Maleinsäureanhydrid gepfropft sind.

Erfindungsgemäß als Komponente D) geeignet können auch kautschukartige Copolymerisate aus Ethylen-Vinylacetat- und Ethylen-(Meth)acrylsäurealkylester-Copolymeren sein. Geeignet als Komponente D) sind auch die in der GB PS 1 284 489 beschriebenen Ethylencopolymere mit Aminoacrylatmonomeren. Weiterhin lassen sich auch Copolymere aus Olefinen, Acrylaten und säurefunktionellen Monomeren wie z. B. (Meth)acrylsäure oder Maleinsäureanhydrid verwenden.

Besonders geeignete Komponenten D) im Sinne der Erfindung sind kautschukartige Pfropfpolymerisate, beispielsweise Pfropfpolymerisate aus α-Olefin-Polymerisaten und Carbonsäure- und/oder Ester-Pfropfmonomeren, wobei als Pfropfgrundlagen Copolymere oder Homopolymere aus Ethylen, Propylen und Buten-(1) geeignet sind.

Geeignete Pfropfpolymerisate (Elastomere D) sind auch die aus den Patentanmeldungen DE-A 2 622 876, EP-A 13 941, DE-A 2 622 973, DE-A 2 401 149 und EP-A 9757 bekannten Poly-α-olefinkautschuk-Maleinsäureanhydrid-Addukte, die gemäß DE-A 3 335 706 bekannten Umsetzungsprodukte aus Ethylen-Copolymeren mit Maleinsäureanhydrid und Dialkylestern der Malein- bzw. Fumarsäure, die gemäß FR-PS 1 568 637 mit ungesättigten Säuren gepfropften Polyolefinkautschuke (GB-PS 998 439), sowie die z. B. in der DE-A 2 622 973 beschriebenen Maleinsäure-gepfropften EPDM-Kautschuke.

Vorteilhaft geeignet sind insbesondere Pfropfpolymerisate, die durch Aufpfropfen von Styrolmonomeren und Acrylnitril auf ein Kautschukpolymerisat, dessen Glastemperatur unter 0°C, vorzugsweise unter -20°C, liegt, entstehen; Kautschukpolymerisate sind dann beispielsweise Polybutadien, Butadien-Acrylester-Copolymere z. B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z. B. aus JA 48 850 oder US-PS 4 217 424.

Als Komponente D) sind auch die gemäß DE-A 2 906 222 bekannten Pfropfpolymerisate aus Styrol und Acrylnitril auf Polybutadien oder Copolymerisaten aus Butadien und α,β-ungesättigten Monomeren, wie beispielsweise Styrol, Acrylnitril, niedere Alkylester oder Acryl- oder Methacrylsäure, sowie die bekannten bepfropften Acrylatkautschuke geeignet.

Vorteilhaft geeignet sind auch die z. B. in der DE-A 3 200 070 beschriebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zweiten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als Pfropfgrundlage hergestellten Pfropfprodukte. Bevorzugt werden dabei Kautschuke auf Basis Polybutadien und/oder Polyisopren, die bis zu 40, vorzugsweise bis zu 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Besonders hochwertige erfindungsgemäße Formmassen erhält man, wenn als Komponente D) Pfropfpolymerisate mit teilchenförmiger Struktur und partieller Vernetzung verwendet werden. Vorteilhafte Teilchengrößen (d₅₀-Werte) liegen im Bereich von 0,05 bis 2 µm, besonders 0,08 bis 0,6 µm, insbesondere von 0,15 bis 0,5 µm. Die zur Herstellung solcher Pfropfpolymerisate eingesetzten Kautschuke sind ebenfalls teilchenförmig, wenigstens teilvernetzt und besitzen Gelgehalte (als Maß für den Vernetzungsgrad) von größer 30 Gew,-%, vorzugsweise größer 70 Gew.-%.

Solche Pfropfpolymerisate enthalten Kautschukgehalte im Bereich 55-85 Gew.-%, bevorzugt 70-80 Gew-.%, und enthalten Kautschuke aus der Reihe der Dienkautschuke (Butadien, Isopren) sowie deren Copolymere mit Styrol, Acrylnitril, Alkyl(meth)acrylat, Vinylether, oder der Alkylacrylatkautschuke (C₁-C₈-Alkyl-Acrylat) sowie deren Copolymere mit Dienmonomeren, Styrol, Acrylnitril, Alkylmethacrylat, Vinylester, Vinylether.

Alkylacrylatkautschuke enthalten üblicherweise geringe Mengen polyfunktioneller Comonomere, die eine Vernetzung der Acrylatkautschuke bewirken, beispielsweise Divinylbenzol, Diol-bis-(Meth)-acrylate, Bis-Acrylamide, Acrylamid-Methylolderivate, Trivinylbenzol, Triallylcyanurat, Triallylisocyanurat. Solche Kautschukgrundlagen sind bekannt. Besonders geeignete Acrylat-Kautschukgrundlagen besitzen eine Kern-Mantel-Struktur, insbesondere einen Dienkautschukkern mit einem Kernanteil von 0,5 bis 10, vorzugsweise 2 bis 4 Gew.-%.

Die bevorzugt geeigneten, auf die Kautschukgrundlagen aufgepfropften Monomere sind Alkylmethacrylat, Styrol, Acrylnitril, Alkylacrylat, Acrylamide, insbesondere Methylmethacrylat sowie Kombinationen aus Methylmethacrylat und Alkylacrylaten oder Styrol in Kombination mit Acrylnitril.

Besonders gut geeignete, bevorzugt eingesetzte Pfropfpolymerisate vom Typ D) enthalten Kautschukgehalte ≥55 Gew.-%, enthalten Kautschuk mit Gelgehalten größer 70 Gew.-%, besitzen Teilchengrößen von 0,15 bis 0,5 µm, enthalten Polybutadienkautschuk oder Polybutylacrylatkautschuk sowie entsprechende Kern/Mantel-Kautschuke (nach DE-A 3 200 070) und besitzen als Pfropfmonomere Methylmethacrylat, insbesondere in Kombination mit n-Alkylacrylat, oder Styrol-Acrylnitrilmischungen mit Acrylnitrilgehalten zwischen 5-40 Gew.-%. Diese Pfropfpolymerisate lassen sich durchweg durch Emulsionspfropfpolymerisation nach bekannten Methoden herstellen.

### Übliche Additve (E)

Den erfindungsgemäßen Mischungen können ebenfalls noch übliche Additve E) hinzugegeben werden, z.B. Gleit- und Entformungsmittel, Nukleierungsmittel, Weichmacher, Stabilisatoren, Flammfest-Additve, Füll- und Verstärkungsstoffe, Farbstoffe sowie Thermostabilisatoren, Antioxidantien und/oder Lichtschutzmittel.

Diese Additive können in den üblichen Mengen entweder vor der Herstellung der erfindungsgemäßen Mischungen den Komponenten A), B), C), D) oder den binären Mischungen aus A) und C) oder A) und D) oder B) und C) oder B) und D) zugesetzt werden oder nachträglich in die erfindungsgemäßen Mischungen eingearbeitet werden. Die Menge der Additive wird dabei so bemessen, daß die Additive die gewünschte Wirkung in der Mischung entfalten können. Sie ist leicht durch Vorversuche zu ermitteln.

Die erfindungsgemäßen Mischungen lassen sich zur Herstellung von Formkörpern in üblicher Weise verarbeiten. Wie aus den Beispielen ersichtlich ist, zeichnen sich die erfindungsgemäßen Mischungen durch eine gute Zähigkeit und hohe Wärmeformbeständigkeit bei störungsfreien matten Oberflächen aus.

### Beispiele

Eingesetzte Substanzen (Komponenten) in Tabelle 1a und 1b
- A.I: Polyamid-6 mit einer relativen Viskosität von 3,1 (gemessen an einer 1 gew.-%igen Lösung in m-Kresol bei 25°C)
- A.II: Polyamid-6 mit einer relativen Viskosität von 4,0 (gemessen an einer 1 gew.-%igen Lösung in m-Kresol bei 25°C)
- B.: Thermoplastisches, aromatisches Polycarbonat auf der Basis von 2,2-Bis-(4-hydroxyphenyl)-propan mit einer Viskosität von 1,28 (gemessen an einer 0,5 gew.-%igen Lösung in Methylenchlorid)
- C.I: Eine Mischung aus 600 g Methylmethacrylat, 350 g Stearylmethacrylat und 50 g tert.-Butylacrylat wird mit Hilfe eines Hochgeschwindigkeitsrührers in einer Lösung aus 17,9 g Natriumsalz von C₁₄-C₁₈-Alkylsulfonsäuren in 2007 g Wasser emulgiert. Ein Achtel dieser Emulsion wird unter Rühren zu einer Lösung aus 1,79 g Natriumsalz von C₁₄-C₁₈-Alkylsulfonsäuren in 214 g Wasser zugefügt, unter einem leichten Stickstoffstrom auf 75°C erhitzt und mit einer Lösung aus 4,3 g Kaliumperoxodisulfat in 100 g Wasser versetzt, Innerhalb 4 Stunden wird die restliche Emulsion gleichmäßig bei 75°C zudosiert.
Anschließend wird 8 Stunden bei 75°C auspolymerisiert. Es wird ein Latex mit einem Feststoffgehalt von 30 Gew.-% erhalten. Das isolierte Polymerisat besitzt einen L-Wert von 50.
Der L-Wert ist definiert als (ηᵣₑₗ -1/0,005 mit ηᵣₑₗ = relative Lösungsviskosität, gemessen in Dimethylformamid bei 25°C und einer Konzentration von 0,005 g/cm³).
- C.II: Zur Herstellung des Polymerisates C.II, die im übrigen analog zur Herstellung von C.I erfolgte, wurde folgende Monomermischung verwendet:
625 g Methylmethacrylat
350 g Stearylmethacrylat
25 g tert.-Butylacrylat
- C.III: Zur Herstellung des Polymerisates C.III, die im übrigen analog zur Herstellung von C.I erfolgte, wurde folgende Monomermischung verwendet:
550 g Methylmethacrylat
350 g Stearylmethacrylat
100 g tert.-Butylacrylat
- C.IV: N-Methyl-Glutarimid-Einheiten C.IV und Säuregruppen enthaltendes Polymethacrylat entsprechend US 4 246 374 mit einer Glastemperatur von 147°C, einer Wärmeformbeständigkeit nach Vicat-B (entsprechend DIN 53 460) von 142°C und einer Dichte von 1,21 g/cm³ (Paraloid EXL 4151 der Firma ROHM & HAAS, Philadelphia, USA).
- D.I: Pfropfpolymerisat, hergestellt durch Pfropfung von 20 Gew.-% einer Monomermischung aus 88 Gew.-% Methylmethacrylat, 10 Gew.-% n-Butylacrylat und 2 Gew.-% tert.-Butylacrylat auf 80 Gew.-% eines grobteiligen Polybutadienkautschuklatex mit einer Teilchengröße (d₅₀-Wert) von 370 nm und einem Gelgehalt von 93 Gew.-%.
- D.II: Pfropfpolymerisat, hergestellt durch Pfropfung von 20 Gew.-% einer Monomermischung aus 90 Gew.-% Methylmethacrylat und 10 Gew.-% n-Butylacrylat auf 80 Gew.-% eines grobteiligen Polybutadienkautschuklatex mit einer Teilchengröße (d₅₀-Wert) von 370 nm und einem Gelgehalt von 93 Gew.-%.
- D.III: Acrylatpfropfkautschuk (Paraloid EXL 3387 der Firma ROHM & HAAS, Philadelphia, USA).

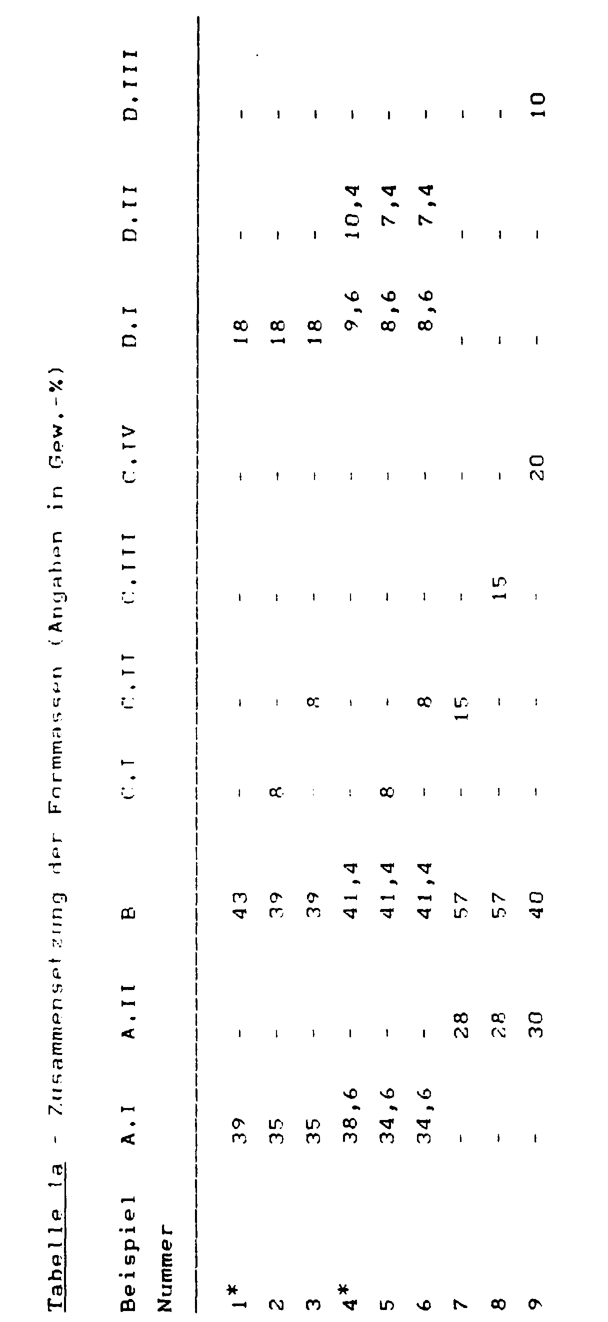

### Herstellung und Prüfung der Formmassen

Auf einem kontinuierlich arbeitenden Doppelwellenextruder wurden das Polyamid A), das Polycarbonat B), das Copolymerisat C) sowie gegebenenfalls das Elastomer D) aufgeschmolzen und in der Schmelze homogenisiert. Die Zylindertemperaturen wurden so gewählt, daß Massetemperaturen von 260 bis 340°C eingehalten wurden. Der Schmelzestrang wurde in Wasser abgeleitet, granuliert und getrocknet.

Von den Formmassen wurden auf einer üblichen Spritzgußmaschine 80 mm x 10 mm x 4 mm Prüfstäbe hergestellt. Geprüft wurden der Biege-E-Modul (DIN 53 452), die Wärmeformbeständigkeit (HDT-A bei einer Randfaserdehnung von 0,2 %, ISO 75) die Schlagzähigkeit bzw. Kerbschlagzähigkeit nach Izod (ISO 180). Zur visuellen Beurteilung von Unverträglichkeiten wurden 60 mm x 40 mm x 4 mm-Farbmusterplättchen abgespritzt und deren Oberfläche bewertet.

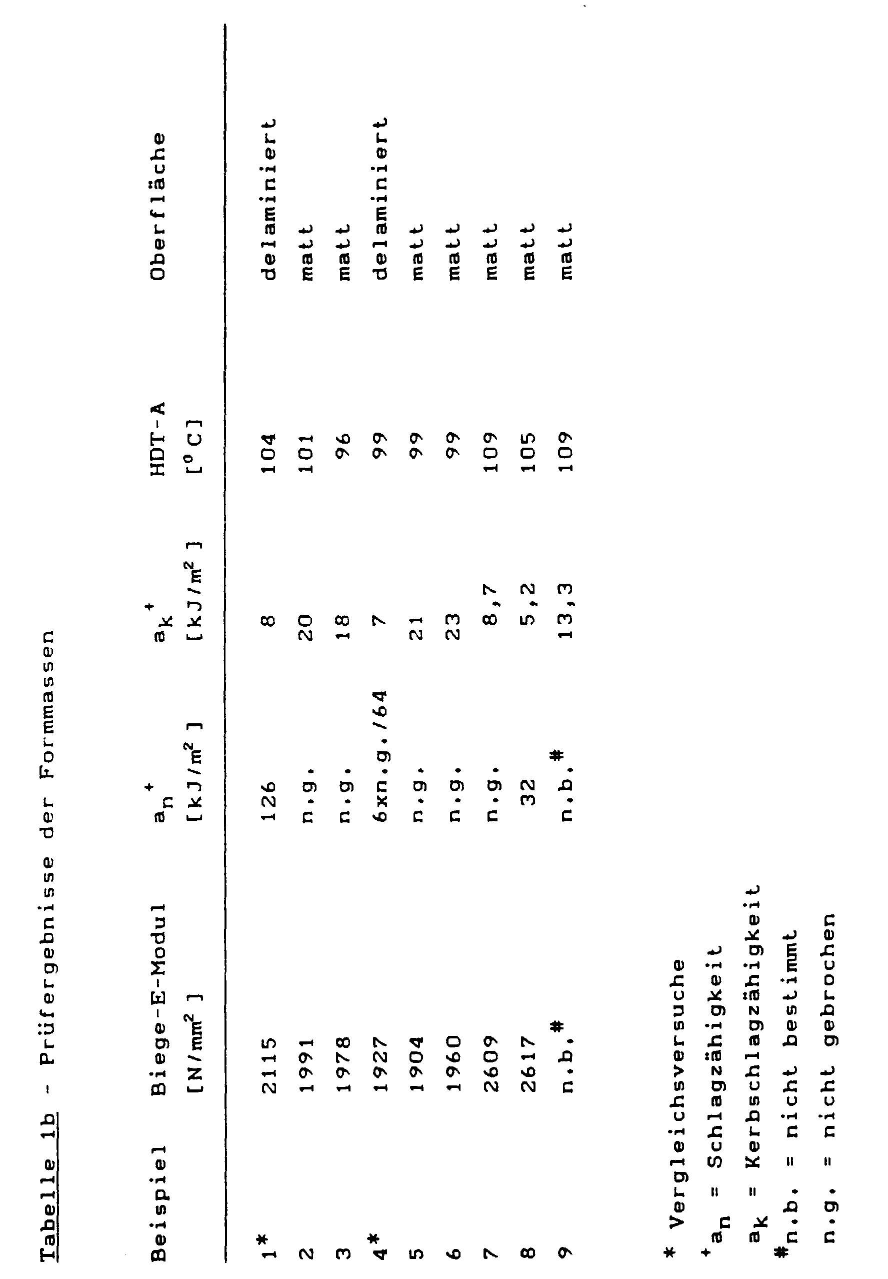

Die Beispiele 7 und 8 belegen, daß durch Zusatz der Komponente C) auch ohne Kautschuk eine Verarbeitung von Polycarbonat und Polyamid ermöglicht wird. Bei einem Vergleichsversuch ohne Zusätze von C) wurden aufgeblähte Stränge aus dem Extruder erhalten.

Eingesetzte Substanzen (Komponenten) in Tabelle 2a und 2b
- C.V: Copolymer aus 95 Gew.-% Methylmethacrylat und 5 Gew.-% tert.-Butylacrylat, hergestellt durch wäßrige Emulsionspolymerisation.
- C.VI: (Vergleichspolymer)
Eine Mischung aus 650 g Methylmethacrylat und 350 g Stearylmethacrylat wird mit Hilfe eines Hochgeschwindigkeitsrührers in einer Lösung aus 17,9 g Natriumsalz von C₁₄-C₁₈-Alkylsulfonsäuren in 2007 g Wasser emulgiert. Ein Achtel dieser Emulsion wird unter Rühren zu einer Lösung aus 1,79 g Natriumsalz von C₁₄-C₁₈-Alkylsulfonsäuren in 214 g Wasser zugefügt, unter einem leichten Stickstoffstrom auf 75°C erhitzt und mit einer Lösung aus 4,3 g Kaliumperoxodisulfat in 100 g Wasser versetzt. Innerhalb 4 Stunden wird die restliche Emulsion gleichmäßig bei 75°C zudosiert. Anschließend wird 8 Stunden bei 75°C auspolymerisiert. Es wird ein Latex mit einem Feststoffgehalt von 30 Gew.-% erhalten. Das isolierte Polymerisat besitzt einen L-Wert von 48.
Der L-Wert ist definiert als (ηᵣₑₗ -1/0,005) mit ηᵣₑₗ = relative Lösungsviskosität, gemessen in Dimethylformamid bei 25°C und einer Konzentration von 0,005 g/cm³).
- C.VII: Eine Mischung aus 700 g Methylmethacrylat, 250 g eines Monomers der Formel (I) mit p = 5, q = 10, R = CH₃, R₁ = R₂ = H und 50 g tert.-Butylacrylat wird mit Hilfe eines Hochgeschwindigkeitsrührers in einer Lösung aus 17,9 g Natriumsalz von C₁₄-C₁₈-Alkylsulfonsäuren in 2007 g Wasser emulgiert. Ein Achtel dieser Emulsion wird unter Rühren zu einer Lösung aus 1,8 g Natriumsalz von C₁₄-C₁₈-Alkylsulfonsäuren in 214 g Wasser zugefügt, unter einem leichten Stickstoffstrom auf 75°C erhitzt und mit einer Lösung aus 4,3 g Kaliumperoxodisulfat in 100 g Wasser versetzt. Innerhalb 4 Stunden wird die restliche Emulsion gleichmäßig bei 75°C zudosiert. Anschließend wird 8 Stunden bei 75°C auspolymerisiert. Es wird ein Latex mit einem Feststoffgehalt von 30 Gew.-% erhalten.
- C.VIII: (Vergleichspolymer)
Zur Herstellung des Polymerisates, die im übrigen analog zur Herstellung von C.VII erfolgte, wurde folgende Monomermischung verwendet:
700 g Methylmethacrylat
250 g eines Monomers der Formel (I) mit p = 5,
q = 10, R = CH₃, R₁ = R₂ = h
50 g n-Butylacrylat
- C.IX: (Vergleichspolymer)
Zur Herstellung des Polymerisates, die im übrigen analog zur Herstellung von C.VII erfolgte, wurde folgende Monomermischung verwendet:
504 g Styrol
196 g Acrylnitril
250 g eines Monomers der Formel (I) mit p = 5,
q = 10, R = CH₃, R₁ = R₂ = H
50 g tert.-Butylacrylat
- D.IV: EPM-Kautschuk aus Ethylen (45 Gew.-%) Propylen, gepfropft mit ca. 0,7 Gew.-% Maleinsäureanhydrid; Exxelor® VA 1803 (Handelsprodukt der Firma EXXON)

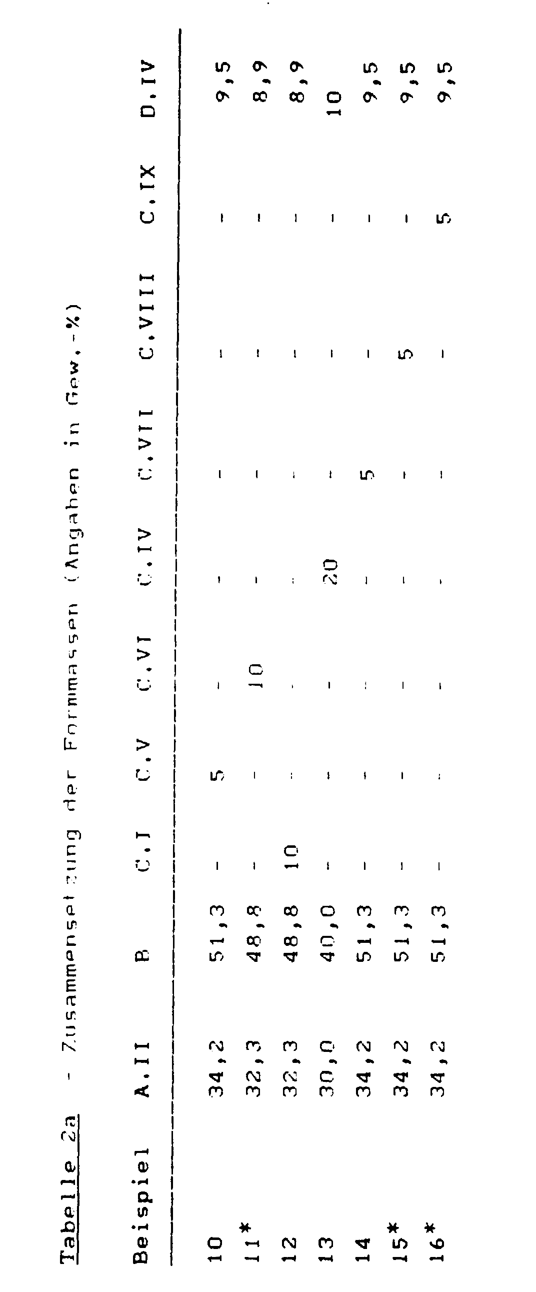

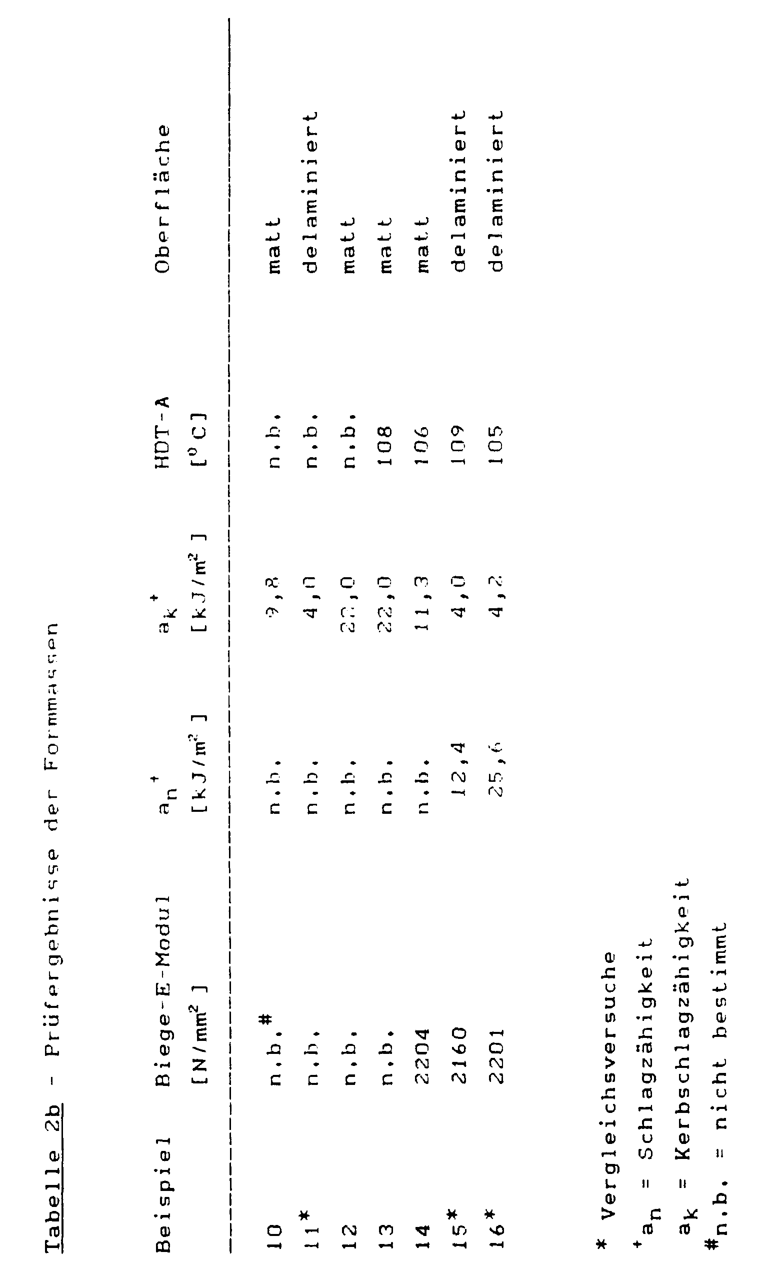

## Patentansprüche

1. Mischungen enthaltend
A) 5 bis 70 Gew.-%, thermoplastische Polyamide,
B) mindestens 10 Gew.-%, thermoplastische, aromatische Polycarbonate oder Polyestercarbonate,
C) 1 bis 20 Gew.-%, thermoplastische Copolymerisate, aufgebaut aus
C1) 9,5 bis 99,5 Gew.-%, (Meth-)Acrylsäure-C₁-C₄-Alkylester
C2) 0 bis 90 Gew.-%, (Meth-)Acrylsäure-C₁₀-C₄₀-Alkylester oder (Meth-)Acrylsäureester der allgemeinen Formel 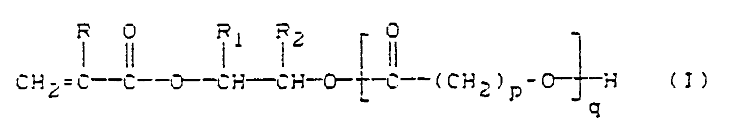 worin
R, R₁, R₂ Wasserstoff oder Methyl,
p 2 bis 6 und
q 2 bis 200 bedeuten,
C3) 0,5 bis 15 Gew.%, Vinylmonomere mit Säure- oder tert. Estergruppen und wobei die Polymerisate C) gegebenenfalls mindestens 5 Gew.-% Glutarimid-Einheiten aufweisen können,
D) 0 bis 30 Gew.-%, Elastomere,
wobei sich A), B), C) und D) zu 100 Gew.-%, und
E) gegebenenfalls weitere Additive.

2. Mischungen gemäß Anspruch 1 enthaltend als Komponente D) elastomere Schlagzähmodifikatoren und als E) Gleit- und Entformungsmittel, Nukleierungsmittel, Weichmacher, Stabilisatoren (z.B. Thermostabilisatoren), Flammfest-Additive, Füll- und Verstärkerstoffe, Farbstoffe, Antioxidantien und/oder Lichtschutzmittel.

3. Verwendung der Mischungen nach Ansprüchen 1 und 2 zur Herstellung von Formkörpern unter thermoplastischer Verarbeitung.

## Claims

1. Blends containing
A) 5 to 70 wt.% of thermoplastic polyamides,
B) at least 10 wt.% of thermoplastic, aromatic polycarbonates or polyester carbonates,
C) 1 to 20 wt.% of thermoplastic copolymers synthesised from
C1) 9.5 to 99.5 wt.% of (meth)acrylic acid C₁-C₄ alkyl esters
C2) 0 to 90 wt.% of (meth)acrylic acid C₁₀-C₄₀ alkyl esters or (meth)acrylic acid esters of the general formula 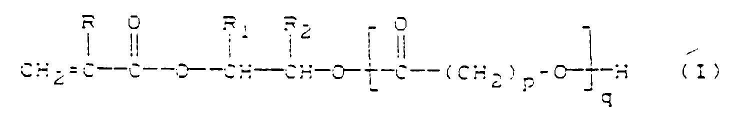 in which
R, R₁, R₂ mean hydrogen or methyl,
p means 2 to 6 and
q means 2 to 200,
C3) 0.5 to 15 wt.% of vinyl monomers having acid or tertiary ester groups and wherein the polymers C) may optionally contain at least 5 wt.% of glutarimide units,
D) 0 to 30 wt.% of elastomers,
wherein A), B), C) add up to 100 wt.%, and
E) optionally further additives.

2. Blends according to claim 1 containing elastomeric impact modifiers as component D) and lubricants and mould release agents, nucleating agents, plasticisers, stabilisers (for example heat stabilisers), flameproofing additives, fillers and reinforcing materials, dyes, antioxidants and/or light stabilisers as component E).

3. Use of the blends according to claims 1 and 2 for the production of mouldings by thermoplastic processing.

## Revendications

1. Mélanges contenant
A) 5 à 70 % en poids de polyamides thermoplastiques,
B) au moins 10 % en poids de polycarbonates ou polyestercarbonates aromatiques thermoplastiques,
C) 1 à 20 % en poids de copolymères thermoplastiques constitués eux-mêmes de
C1) 9,5 à 99,5 % en poids de (méth)acrylates d'alkyle en C₁-C₄,
C2) 0 à 90 % en poids de (méth)acrylates d'alkyle en C₁₀-C₄₀ ou d'esters (méth)acryliques de formule générale 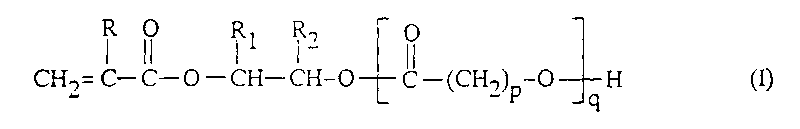 dans laquelle
R, R₁ et R₂ représentent l'hydrogène ou des groupes méthyles,
p est un nombre allant de 2 à 6 et
q est un nombre allant de 2 à 200,
C3) 0,5 à 15 % en poids de monomères vinyliques à groupes acides ou tert-esters, les polymères C) pouvant contenir, le cas échéant, au moins 5 % en poids de motifs de glutarimide,
et
D) 0 à 30 % en poids d'élastomères,
les pourcentages des composants A), B), C) et D) se complétant à 100 % en poids, et
E) le cas échéant d'autres additifs.

2. Mélanges selon revendication 1 contenant en tant que composants D) des modifiants élastomères de la résilience et en tant qu'additifs E) des agents lubrifiants et agents de démoulage, des agents de nucléation, des plastifiants, des stabilisants, par exemple des stabilisants à la chaleur, des agents ignifugeants, des matières de charge, des matières renforçantes, des colorants, des antioxydants et/ou des agents de protection contre la lumière.

3. Utilisation des mélanges selon les revendications 1 et 2 pour la fabrication d'objets moulés par façonnage thermoplastique.
